# DEMANDE DE BREVET EUROPEEN

(11) **EP 3 454 581 A1**
(43) Date de publication de la demande: **13.03.2019**
(21) Numéro de dépôt: 18192855.7
(22) Date de dépôt: 06.09.2018
(51) Int. Cl.: H04W 4/024, B64C 39/02

(54) **PROCÉDÉ DE DIFFUSION D'UN IDENTIFIANT DE RÉSEAU DE COMMUNICATION, PROCÉDÉ DE CONNEXION À UN RÉSEAU DE COMMUNICATION, PROGRAMME D'ORDINATEUR, SUPPORT D'ACCUEIL ET TERMINAL MOBILE ASSOCIÉS**

(30) Priorité: 06.09.2017 FR 1758222
(71) Demandeur: Parrot Drones, 75010 Paris (FR)
(72) Inventeur: GAGER, Sébastien, 75016 Paris (FR); GROSTABUSSIAT, Hugo, 75018 Paris (FR); LASSIEUR, Clément, 75018 Paris (FR); BARSE, Thomas, 78100 Saint Germain en Laye (FR)
(74) Mandataire: Lavoix

(57) **Abrégé**

L'invention concerne un procédé (45) de diffusion d'un identifiant (SSID) de réseau associé à un premier protocole (P₁), le réseau comprenant un terminal mobile (30) et un accessoire amovible (20) pour un support d'accueil (14), tel qu'un drone (14), l'accessoire (20) comprenant une caméra (22), un premier émetteur-récepteur (24) de données selon le premier protocole (P₁),
le procédé de diffusion étant mis en oeuvre par le support d'accueil (14) comprenant un deuxième émetteur-récepteur (34) embarqué au sein du support d'accueil (14), et propre à communiquer selon un deuxième protocole (P₂),
le procédé (45) comprenant au moins, une fois l'accessoire (20) connecté au support d'accueil :
- la diffusion (46) d'un message comprenant un identifiant du support d'accueil (14) et représentatif de la connexion de l'accessoire (20),
- la configuration (48) et la diffusion (50) par le premier émetteur-récepteur (24) d'un identifiant réseau (SSID) identique à l'identifiant du support d'accueil (14).

## Description

La présente invention concerne un procédé de diffusion d'un identifiant de réseau de communication associé à un premier protocole de communication sans fil, le réseau comprenant au moins un terminal mobile de communication et un accessoire amovible pour un support d'accueil, tel qu'un support portable ou un véhicule sans pilote à bord, en particulier un drone.

En particulier, le drone est à voilure tournante, ou un drone à voilure fixe, notamment de type "aile volante". Dans la suite, un « drone » désigne un aéronef sans pilote à bord. Un drone est autonome ou piloté à distance notamment à l'aide d'une manette de commande.

L'invention concerne également un procédé de connexion à un réseau de communication associé à un premier protocole de communication sans fil, le réseau de communication étant du type précité.

L'invention concerne également un programme d'ordinateur comportant des instructions logicielles qui, lorsqu'elles sont exécutées par un ordinateur, mettent en oeuvre le procédé de diffusion d'un identifiant de réseau de communication et/ou le procédé de connexion à ce réseau de communication précités.

L'invention concerne également un support d'accueil, tel qu'un support portable ou un véhicule sans pilote à bord, en particulier un drone, sur lequel un accessoire amovible est propre à être connecté formant alors un ensemble électronique comprenant à la fois le support d'accueil et l'accessoire amovible connecté au support d'accueil.

L'invention concerne également un terminal mobile de communication propre à appartenir à un réseau de communication associé à un premier protocole de communication sans fil, le réseau de communication étant du type précité.

L'invention concerne également un système électronique comprenant au moins le support d'accueil et le terminal mobile du type précité.

On connait des supports d'accueil portables et mobiles d'accessoires correspondant notamment à une caméra, tels que des drones propres à être pilotés à distance notamment à l'aide d'une manette selon un protocole de communication sans fil.

Par exemple, à des fins de miniaturisation et de limitation de la consommation d'énergie de la commande comme du drone, le protocole de communication sans fil utilisé limite la consommation d'énergie nécessaire pour produire le flux de communication entre manette et drone et correspond par exemple à un protocole de communication de portée faible à moyenne tel que le protocole NFC (de l'anglais *Near Field Communication*) ou plus particulièrement le protocole BLE de l'anglais *Bluetooth Low Energy*) également connu sous le nom « Bluetooth smart®».

Cependant ce type de drones pilotés au moyen de tels protocoles sans fil à faible consommation d'énergie ne sont pas adaptés pour la communication en temps réel d'un flux vidéo requérant un débit de communication plus élevé.

Ainsi, actuellement ce type de drones ne permet pas une application de capture et de diffusion d'images en temps réel, ce qui limite l'expérience de l'utilisateur et empêche simplement un pilotage immersif de tels drones.

Un des buts de l'invention est alors de proposer une solution pour augmenter l'expérience immersive de l'utilisateur tout en optimisant la consommation d'énergie et le volume associé du support d'accueil comme de la manette télécommandant le support d'accueil.

A cet effet, l'invention a pour objet un procédé de diffusion d'un identifiant de réseau de communication associé à un premier protocole de communication sans fil, le réseau comprenant au moins un terminal mobile de communication et un accessoire amovible pour un support d'accueil, tel qu'un support portable ou un véhicule sans pilote à bord, en particulier un drone, l'accessoire comprenant au moins une caméra, un premier émetteur-récepteur de données selon le premier protocole de communication, et un connecteur configuré pour la connexion électrique de l'accessoire à un port de connexion du support d'accueil,
le procédé de diffusion étant mis en oeuvre par le support d'accueil comprenant un deuxième émetteur-récepteur embarqué au sein du support d'accueil, le deuxième émetteur-récepteur étant propre à communiquer selon un deuxième protocole de communication distinct du premier protocole de communication, le procédé comprenant au moins, une fois l'accessoire connecté électriquement au support d'accueil :
- la diffusion, par le deuxième émetteur-récepteur, d'un message comprenant au moins un identifiant du support d'accueil, le message étant en outre représentatif de la connexion de l'accessoire au support d'accueil,
- la configuration et la diffusion d'un identifiant réseau propre à être émis par le premier émetteur-récepteur de l'accessoire amovible, l'identifiant réseau étant identique à l'identifiant du support d'accueil.

Suivant d'autres aspects avantageux de l'invention, le procédé de diffusion d'un identifiant de réseau de communication est tel que le premier protocole de communication correspond au Wi-Fi et dans lequel le deuxième protocole de communication correspond au Bluetooth à basse énergie.

L'invention a également pour objet un procédé de connexion à un réseau de communication associé à un premier protocole de communication sans fil, le réseau comprenant au moins un terminal mobile et un accessoire amovible pour un support d'accueil, telle qu'un support portable ou un véhicule sans pilote à bord, en particulier un drone, l'accessoire comprenant au moins une caméra, un premier émetteur-récepteur de données selon le premier protocole de communication, et un connecteur configuré pour la connexion électrique de l'accessoire à un port de connexion du support d'accueil,
le support d'accueil comprenant un deuxième émetteur-récepteur embarqué au sein du support d'accueil, le deuxième émetteur-récepteur étant propre à communiquer selon un deuxième protocole de communication distinct du premier protocole de communication,
le procédé de connexion étant mis en oeuvre par le terminal mobile et comprenant successivement :
- la réception selon le deuxième protocole de communication d'un message émis par le deuxième émetteur-récepteur du support d'accueil, le message comprenant un identifiant du support d'accueil, le message étant en outre représentatif de la connexion de l'accessoire au support d'accueil,
- la réception d'une information de sélection d'utilisation du support d'accueil saisie par un utilisateur, et
- la connexion automatique du terminal mobile au réseau de communication associé au premier protocole de communication sans fil, le réseau de communication étant identifié par le terminal mobile au moyen d'un identifiant réseau correspondant à l'identifiant du support d'accueil.

L'invention a également pour objet un programme d'ordinateur comportant des instructions logicielles qui, lorsqu'elles sont exécutées par un ordinateur, mettent en oeuvre au moins l'un des procédés tel que définis ci-dessus.

L'invention a également pour objet un support d'accueil, tel qu'un support portable ou un véhicule sans pilote à bord, en particulier un drone, sur lequel un accessoire amovible est propre à être connecté, l'accessoire comprenant au moins une caméra, un premier émetteur-récepteur de données selon le premier protocole de communication, et un connecteur configuré pour la connexion électrique de l'accessoire à un port de connexion du support d'accueil,
le support d'accueil comprenant :
- un deuxième émetteur-récepteur embarqué au sein du support d'accueil, le deuxième émetteur-récepteur étant propre à :
   - communiquer selon un deuxième protocole de communication distinct du premier protocole de communication,
   - diffuser un message, une fois l'accessoire connecté électriquement au support d'accueil, le message comprenant un identifiant du support d'accueil, le message étant en outre représentatif de la connexion de l'accessoire au support d'accueil,
- un module de configuration d'un identifiant réseau propre à être émis par le premier émetteur-récepteur de l'accessoire amovible, l'identifiant réseau étant identique à l'identifiant du support d'accueil, le réseau de communication étant associé au premier protocole de communication sans fil et comprenant au moins un terminal mobile et un accessoire amovible pour un support d'accueil.

Suivant d'autres aspects avantageux de l'invention, le support d'accueil comporte l'une ou plusieurs des caractéristiques suivantes, prises isolément ou suivant toutes les combinaisons techniquement possibles :
- le port de connexion du support d'accueil est un port USB dédié au moins à la connexion dudit accessoire ;
- le déplacement du support d'accueil est propre à être piloté par :
   - une manette de commande au moyen d'instructions de pilotage transmises conformément au deuxième protocole de communication indépendamment de la connexion de l'accessoire au support d'accueil, ou
   - le terminal mobile au moyen d'instructions de pilotage transmises conformément au premier protocole de communication, en présence de l'accessoire amovible comprenant la caméra connecté au support d'accueil, ou au moyen d'instructions de pilotage transmises conformément au deuxième protocole de communication, en l'absence de l'accessoire amovible comprenant la caméra connecté au support d'accueil ;
- le premier émetteur-récepteur de l'accessoire amovible connecté au support d'accueil est propre à transmettre un flux vidéo capturé par ladite caméra selon le premier protocole de communication audit terminal mobile une fois connecté audit réseau de communication ;
- le support d'accueil est configuré pour transmettre selon le premier protocole de communication, via le premier émetteur-récepteur, au moins une information de restitution tête haute propre à être superposée en temps réel sur ledit flux vidéo affiché via ledit terminal mobile..

L'invention a également pour objet un terminal mobile de communication propre à appartenir à un réseau de communication associé à un premier protocole de communication sans fil, le réseau de communication comprenant au moins le terminal mobile et un accessoire amovible pour un support d'accueil, telle qu'un support portable ou un véhicule sans pilote à bord, en particulier un drone, l'accessoire comprenant au moins une caméra, un premier émetteur-récepteur de données selon le premier protocole de communication, et un connecteur configuré pour la connexion électrique de l'accessoire à un port de connexion du support d'accueil,
le support d'accueil comprenant un deuxième émetteur-récepteur embarqué au sein du support d'accueil, le deuxième émetteur-récepteur étant propre à communiquer selon un deuxième protocole de communication distinct du premier protocole de communication,
le terminal mobile comprenant :
- un premier module d'émission-réception selon le deuxième protocole de communication d'un message émis par le deuxième émetteur-récepteur du support d'accueil, le message comprenant un identifiant du support d'accueil, le message étant en outre représentatif de la connexion de l'accessoire au support d'accueil,
- un module de réception d'une information de sélection d'utilisation du support d'accueil saisie par un utilisateur, et
- un module de connexion automatique du terminal mobile au réseau de communication associé au premier protocole de communication sans fil, le réseau de communication étant identifié par le terminal mobile au moyen d'un identifiant réseau correspondant à l'identifiant du support d'accueil.

Suivant d'autres aspects avantageux de l'invention, le terminal mobile comporte l'une ou plusieurs des caractéristiques suivantes, prises isolément ou suivant toutes les combinaisons techniquement possibles :
- le terminal mobile est configuré pour être insérable dans un système de visualisation immersive propre à être porté par un utilisateur ;
- le terminal mobile, une fois connecté automatiquement audit réseau de communication associé au premier protocole de communication, est configuré pour :
- recevoir au moyen d'un deuxième module d'émission-réception et restituer un flux vidéo reçu selon le premier protocole de communication, et
- en cas d'interruption de la connexion au réseau de communication associé au premier protocole de communication en cours de restitution du flux vidéo, afficher la dernière image reçue préalablement à ladite interruption pendant une période prédéterminée.

L'invention a également pour objet un système électronique comprenant au moins le support d'accueil et le terminal mobile du type précité, le système électronique étant propre à mettre en oeuvre à la fois le procédé de diffusion d'un identifiant de réseau de communication et le procédé de connexion à un réseau de communication précités.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue en perspective d'un système électronique de pilotage de support d'accueil pour caméra amovible et de capture vidéo selon l'invention, comprenant un drone, évoluant dans les airs sous le contrôle d'un équipement de télécommande distant;
- la figure 2 est un organigramme d'un procédé de diffusion d'un identifiant de réseau de communication selon l'invention ;
- la figure 3 est un organigramme d'un procédé de connexion à un réseau de communication selon l'invention ;
- la figure 4 illustre trois exemples d'affichages successifs obtenus sur le terminal mobile selon la présente invention;
- la figure 5 est un diagramme séquentiel représentatif des échanges de communication au sein du système selon la présente invention.

Dans la suite de la description, l'expression « sensiblement égal à » s'entend comme une relation d'égalité à plus ou moins 10%, c'est-à-dire avec une variation d'au plus 10%, de préférence encore comme une relation d'égalité à plus ou moins 5%, c'est-à-dire avec une variation d'au plus 5%.

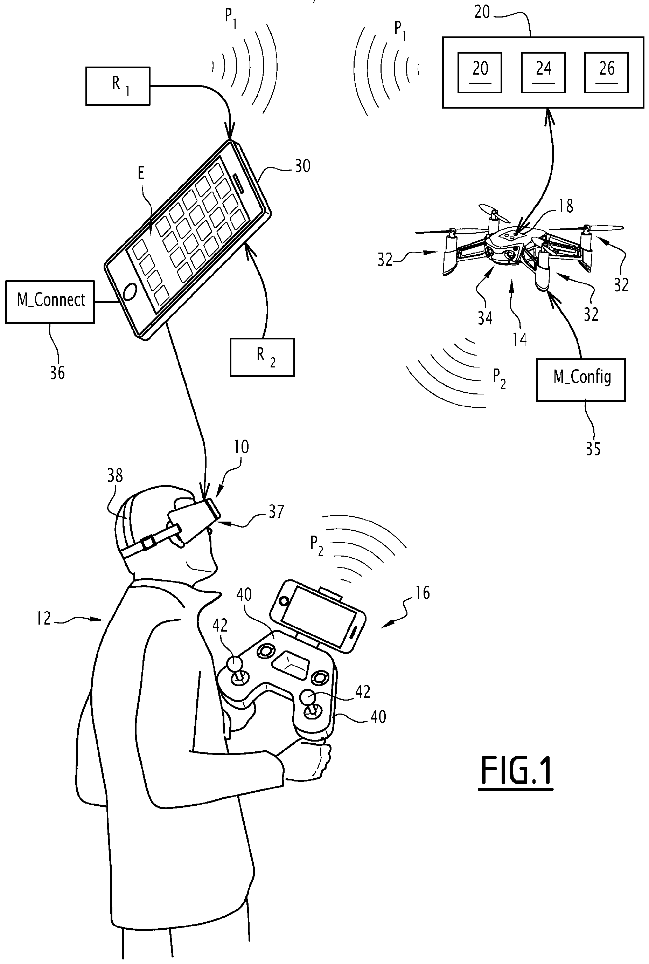

Sur la figure 1, un système électronique de pilotage de support d'accueil pour caméra amovible permet, au moyen d'un système électronique de visualisation 10, à un utilisateur 12 d'optimiser le guidage d'un support d'accueil correspondant à un drone 14 et de collecter un flux vidéo obtenu à l'aide d'un accessoire, comprenant la caméra, et connecté au drone 14. Une fois connecté au drone 14, l'accessoire amovible comprenant la caméra forme avec le drone 14 un ensemble électronique de capture d'image mobile.

Le drone 14 est un engin volant motorisé pilotable à distance, notamment via une manette 16 de télécommande permettant à l'utilisateur 12 de saisir ses commandes de vol.

Le drone 14, c'est-à-dire un aéronef sans pilote à bord, comprend un port de connexion 18 d'un accessoire amovible 20 comprenant au moins une caméra 22, un premier émetteur-récepteur 24 de données selon un premier protocole de communication P1, correspondant notamment au Wi-Fi, et un connecteur 26 configuré pour la connexion électrique de l'accessoire au port de connexion 18 du drone 14, par exemple un port USB (de l'anglais *Universal Serial Bus*).

La caméra 22 comprend un objectif associé à un capteur d'image, non représentés, configurés pour prendre une image d'une scène comportant une pluralité d'objets.

Le premier émetteur-récepteur 24 de données de l'accessoire amovible 20 est notamment propre à transmettre en temps réel les données associées au flux vidéo capturé en temps réel par la caméra 22 à un terminal mobile 30 propre à être inséré dans le système de visualisation 10.

Pour ce faire, le premier émetteur-récepteur 24 comprend par exemple une pile vidéo (de l'anglais *Video Stack*) un serveur, non représenté, conforme au protocole réseau RTCP (de l'anglais *Real-time Transport Control Protocol*) reposant sur des transmissions périodiques de paquets de données de contrôle, et un diffuseur de données conforme au protocole de communication informatique RTP (de l'anglais *Real-time Transport Protocol*). Une telle pile vidéo du premier émetteur-récepteur 24 est propre à délivrer un flux vidéo à un module de routage conforme au protocole Internet (IP de l'anglais *Internet Protocol*) propre à router le flux vidéo vers l'antenne Wi-Fi, non représentée du premier émetteur-récepteur 24 de sorte que l'antenne émet un flux vidéo, sous la forme de paquets de données conformes aux protocoles UDP (de l'anglais *User Datagram Protocol*) et RTP, à destination du premier module d'émission- réception R₁ Wi-Fi du terminal mobile 30 propre à : émettre des message RTCP en retour, recevoir et restituer sur un écran E d'affichage du terminal mobile 30.

De plus, selon un aspect particulier, le premier émetteur-récepteur 24 du drone 14 est configuré pour transmettre selon le premier protocole de communication P₁, au moins une information I_HUD de restitution tête haute propre à être superposée en temps réel sur ledit flux vidéo affiché via ledit terminal mobile 30 dans le système de visualisation 10.

Par ailleurs, le premier module d'émission-réception R₁ Wi-Fi du terminal mobile 30, une fois la connexion avec le premier émetteur-récepteur 24 de l'accessoire amovible 20 comprenant la caméra 22 et connecté au drone 14, qui alimente électriquement le premier émetteur-récepteur 24, est également propre en retour à transmettre des commandes de réglage vidéo au drone 14 afin de contrôler par exemple le débit du flux vidéo, la qualité d'image, le début/la fin de la diffusion/enregistrement du flux vidéo, un changement de canal Wi-Fi en présence de plusieurs autres utilisateurs de drone, le déclenchement d'un mode anti-scintillement (de l'anglais *Anti-Flickering*), etc. Ces commandes de réglage vidéo émises par le terminal mobile 30 sont propres à transiter par le premier émetteur-récepteur 24 de l'accessoire amovible 20, puis par le connecteur 26 de l'accessoire amovible 20 connecté au port de connexion 18 du drone 14, récupérant ces commandes après passage dans un module logiciel du drone 14, non représenté, propre à transformer ces données sous la forme de paquets conformes au protocole Ethernet.

Le drone 14, est par exemple un drone à voilure tournante comportant au moins un rotor 32 (ou hélice) actionné par au moins un moteur. Sur la figure 1, le drone 14 comporte une pluralité de rotors 32, et est alors appelé drone multirotor. Le nombre de rotors 32 est en particulier égal à quatre dans cet exemple, et le drone 14 est alors un drone quadrirotor ou quadricoptère.

Selon une variante particulière, le drone 14 est de type « mini-drone », et présente des dimensions de 15x15cm à 20x20cm, en particulier 18x18cm pour le modèle MAMBO® au nom de la Demanderesse.

Selon d'autres variantes, l'invention est applicable à tout autre type de drone de taille supérieure à un mini-drone, que le drone soit à voilure tournante ou à voilure fixe, par exemple de type « aile volante ».

Le drone 14 est également muni d'un deuxième émetteur-récepteur 34 pour échanger des données de pilotage ou des données associées à d'autres accessoires amovibles distinct de l'accessoire amovible 20 comprenant la caméra 22, par exemple une pince amovible (de l'anglais *Grabber*) ou un lanceur de billes (de l'anglais *Cannon*), de préférence par ondes radioélectriques selon un deuxième protocole de communication P2, correspondant notamment au protocole BLE (de l'anglais *Bluetooth Low Energy*) également connu sous le nom « Bluetooth smart® », à destination d'un équipement électronique, tel que le deuxième module de réception R₂ du terminal mobile 30, du système électronique de visualisation 10, ou le module de réception, non représenté, de la manette 16.

Plus précisément, selon l'invention, le deuxième émetteur-récepteur 34 est propre à :
- communiquer selon le deuxième protocole de communication P₂ distinct du premier protocole de communication P₁, avec le deuxième module de réception R₂ du terminal mobile 30 et/ou avec le module de réception, non représenté, de la manette 16 ;
- diffuser un message M, une fois l'accessoire 20 connecté électriquement au support d'accueil 14, le message M comprenant un identifiant ID du support d'accueil 14, par exemple MAMBO_thomas (correspondant au drone MAMBO® de l'utilisateur 12 prénommé Thomas), le message étant en outre représentatif de la connexion de l'accessoire 20 au support d'accueil 14.

Par ailleurs, le drone 14 est également muni d'un module de configuration 35 d'un identifiant réseau SSID (de l'anglais *Service Set Identifier*) propre à être émis par le premier émetteur-récepteur 24 de l'accessoire amovible 20, l'identifiant réseau SSID étant identique à l'identifiant du drone 14 MAMBO_thomas, le réseau de communication étant associé au premier protocole de communication sans fil et comprenant au moins un terminal mobile et un accessoire amovible pour un support d'accueil.

Réciproquement, le deuxième module de réception R₂ du terminal mobile 30 est propre à recevoir selon le deuxième protocole de communication P₂ le message M émis par le deuxième émetteur-récepteur 34 du drone 14, le message M comprenant l'identifiant ID du drone 14, le message étant en outre représentatif de la connexion de l'accessoire au support d'accueil.

De plus, le terminal mobile 30 comprend un module de réception, non représenté, d'une information de sélection d'utilisation du drone 14 sur lequel l'accessoire 20 comprenant la caméra 22 est connecté, l'information étant saisie par un utilisateur 12, via une interface de saisie par exemple l'écran tactile E du terminal mobile 30.

Le terminal 30 comprend également un module 36 de connexion automatique du terminal mobile 30 au réseau de communication associé au premier protocole de communication sans fil P₁, à savoir le protocole Wi-Fi, le réseau de communication étant identifié par le terminal mobile 30 au moyen d'un identifiant réseau correspondant à l'identifiant du support d'accueil correspondant au drone14.

En d'autres termes, une fois l'utilisation du drone 14 connecté à l'accessoire 20 comprenant la caméra 22 activée par l'utilisateur 12, le terminal 30 n'est propre à communiquer avec le drone 14 que selon le premier protocole de communication P₁ et n'est plus propre à communiquer avec le drone 14 avec le deuxième protocole de communication P₂ utilisé préalablement notamment pour recevoir le message M.

Par ailleurs, selon un aspect particulier, en cas d'interruption de la connexion du terminal mobile 30 au réseau de communication associé au premier protocole de communication P₁ en cours de restitution du flux vidéo, le terminal mobile 30 est propre à afficher, pendant une période prédéterminée, la dernière image reçue préalablement à ladite interruption. Cet aspect permet notamment à l'utilisateur 12 de se rapprocher de la localisation du drone 14 au moment de l'interruption, la dernière image restituée étant représentative de cette localisation, l'interruption étant éventuellement due à un choc ou accident du drone 14 ayant conduit à la déconnexion de l'accessoire amovible 20 du port de connexion 18 du drone causant une rupture de l'alimentation électrique du premier émetteur-récepteur 24 de cet accessoire 20.

Selon l'exemple représenté sur la figure 1, un système électronique de visualisation 10 permet à l'utilisateur 12 de visualiser des images, notamment des images de la vidéo reçue de la part du drone à voilure tournante 14 via le premier protocole P1 lorsque l'accessoire amovible 20 est connecté au drone 14, permettant ainsi d'alimenter le premier émetteur-récepteur 24 Wi-Fi.

Le système électronique de visualisation 10 comprend le terminal mobile 30, par exemple, un ordiphone (de l'anglais *smartphone*), muni d'un écran d'affichage, et un casque 37 comportant un support de réception du terminal mobile 30, une surface d'appui contre le visage de l'utilisateur 12, en regard de ses yeux, et deux dispositifs optiques disposés entre le support de réception et la surface d'appui.

Le casque comporte en outre une sangle de maintien 38 permettant de maintenir le casque 37 sur la tête de l'utilisateur 12.

Le terminal mobile 30 est amovible par rapport au casque 37 ou intégré au casque 37. Par exemple, préalablement au début de la diffusion du flux en mode immersif (i.e. lorsque le terminal mobile 30 est dans le casque 37, et que le drone 14 est piloté via la manette 16) le terminal mobile 30 est en dehors du casque 37 et propre à être utilisé manuellement par l'utilisateur 12 notamment pour envoyer les informations de réglages vidéo précitées via une application logicielle mobile de restitution de flux vidéo stockée au sein du terminal mobile 30.

Le système électronique de visualisation 10 est, par exemple, relié à la manette 16 via une liaison de données, non représentée, la liaison de données étant une liaison radioélectrique ou encore une liaison filaire.

Le système de visualisation 10 est par exemple un système de visualisation en réalité virtuelle, c'est-à-dire un système permettant à l'utilisateur 12 de visualiser une image dans son champ visuel, avec un angle de champ de vision, également appelé FOV (de l'anglais *Field Of Vision,* ou *Field Of View*), ayant une valeur importante, typiquement supérieure à 90°, de préférence supérieure ou égale à 100°, afin de procurer une vision immersive (également appelée « vision FPV » de l'anglais *First Person View*) pour l'utilisateur 12.

Un tel système de visualisation 10 est optionnel et permet notamment d'augmenter « l'expérience utilisateur » en configuration de pilotage immersif, un pilotage, via le terminal mobile 30 sans utiliser ce système de visualisation 10 ni la manette 16 est également possible.

La manette 16 est connue en soi, et permet par exemple de piloter le drone à voilure tournante 14. La manette 16 comprend deux poignées de préhension 40, chacune étant destinée à être saisie par une main respective de l'utilisateur 12, une pluralité d'organes de commande, comprenant ici deux manches à balai 42 (de l'anglais *joystick*), chacun étant disposé à proximité d'une poignée de préhension 40 respective et étant destiné à être actionné par l'utilisateur 12, de préférence par un pouce respectif.

La manette 16 comprend également une antenne radioélectrique, non représentée et un émetteur-récepteur radioélectrique, non représenté, pour l'échange de données par ondes radioélectriques, via le deuxième protocole P₂ BLE avec le drone à voilure tournante 14, à la fois en liaison montante et en liaison descendante. En d'autres termes, la manette 16 est également propre à diffuser des messages conformes au deuxième protocole P₂ BLE, de tels messages émis par la manette comprenant au moins un identifiant de la manette 16.

En complément, ou à titre d'alternative au regard du système de visualisation 10, le terminal mobile 30 est monté sur la manette 16 pour assister l'utilisateur 12 lors du pilotage du drone 14.

La manette 16 est configurée pour transmettre les commandes de l'utilisateur à un appareil électronique de pilotage automatique (i.e. d'assistance automatique au pilotage manuel de l'utilisateur), non représenté, intégré au drone 14, ce conformément au deuxième protocole P₂ BLE.

En d'autres termes, le drone 14 est propre à être piloté par la manette 16 de commande au moyen d'instructions de pilotage transmises conformément au deuxième protocole de communication P₂, à savoir le protocole BLE, indépendamment de la connexion de l'accessoire 20 au drone 14, ou par le terminal mobile 30 au moyen d'instructions de pilotage transmises conformément au premier protocole de communication P₁, à savoir le protocole Wi-Fi, en présence de l'accessoire amovible 20 comprenant la caméra 22 connecté au support d'accueil, le support d'accueil et l'accessoire amovible qui y est connecté formant alors un ensemble électronique, ou encore par le terminal mobile 30 au moyen d'instructions de pilotage transmises conformément au deuxième protocole de communication P₂, à savoir le protocole BLE, en l'absence de l'accessoire amovible 20 comprenant la caméra 22 connecté au drone 14.

On notera que, bien que ces schémas soient présentés sous forme de circuits interconnectés, la mise en oeuvre des différentes fonctions est selon un mode de réalisation essentiellement logicielle, cette représentation n'ayant qu'un caractère illustratif.

Selon un autre mode de réalisation, l'invention est propre à être mise en oeuvre au moyen d'un ou de plusieurs circuit(s) logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*) montés sur une carte électronique embarquée sur le drone à voilure tournante 14.

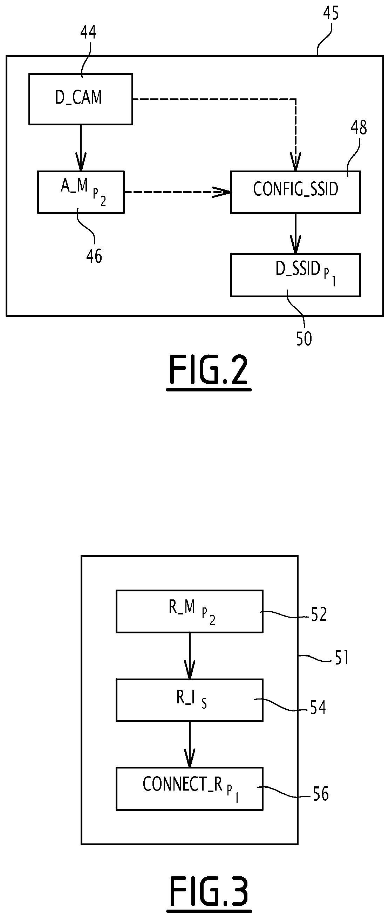

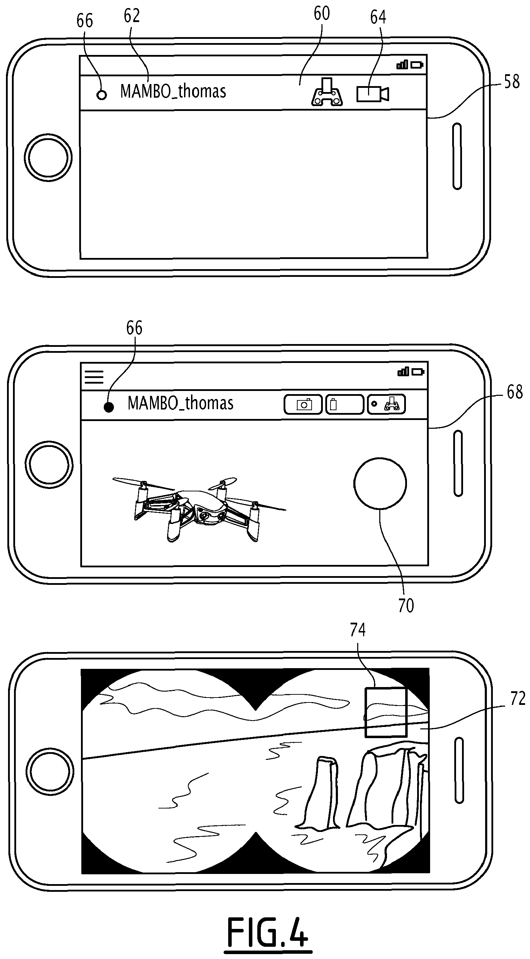

Le fonctionnement du système électronique, comprenant au moins le support d'accueil correspondant au drone 14 et le terminal mobile 30 précités, va être à présent décrit à l'aide de la figure 2 illustrant un organigramme du procédé 45 de diffusion d'un identifiant de réseau de communication mis en oeuvre par le drone 14, de la figure 3 illustrant un organigramme du procédé 51 de connexion au réseau de communication mis en oeuvre par le terminal mobile 30, et à l'aide de la figure 4 illustrant trois exemples d'affichages successifs obtenus sur le terminal mobile 30 selon la présente invention.

Sur la figure 3, le procédé 45 de diffusion d'un identifiant de réseau de communication mis en oeuvre par le drone 14 comprend une première étape 44 de détection de la connexion de l'accessoire amovible 20 comprenant la caméra 22 au drone 14 par détection de la connexion du connecteur 26 de l'accessoire amovible 14 au port de connexion 18 USB du drone 14.

Un tel assemblage de l'accessoire 20 au drone 14 permet notamment d'alimenter électriquement l'émetteur-récepteur 24 Wi-Fi de l'accessoire 20 par la batterie, non représentée du drone 14.

Selon une étape 46, le deuxième émetteur-récepteur 34 du drone 14 diffuse, conformément au deuxième protocole de communication P₂ BLE, un message M comprenant au moins un identifiant de drone 14, par exemple MAMBO_thomas (correspondant au drone MAMBO® de l'utilisateur 12 prénommé Thomas), le message étant en outre représentatif de la connexion de l'accessoire 20 comprenant la caméra 22 au drone 14.

Un tel message M est propre à être diffusé (en anglais *broadcast* ou *BLE advertised*) largement via le protocole BLE, c'est-à-dire à un ou plusieurs terminaux mobiles 30 à la fois.

Puis, ou parallèlement, le procédé 45 de diffusion d'un identifiant de réseau de communication comprend une étape 48 de configuration d'un identifiant réseau SSID propre à être émis par le premier émetteur-récepteur 24 de l'accessoire amovible 20 connecté au drone 14, l'identifiant réseau SSID étant identique à l'identifiant du support d'accueil correspondant au drone 14 c'est-à-dire par exemple MAMBO_thomas.

Autrement dit l'identifiant SSID du réseau Wi-Fi propre à être émis par le premier émetteur-récepteur 24 est imposé par le drone 14 de sorte qu'il soit identique à l'identifiant du drone 14. Cette reconfiguration 48 permet notamment à l'utilisateur 12 d'utiliser de manière transparente n'importe quel accessoire amovible 20 muni d'une caméra 22 (que cet accessoire appartienne ou non à l'utilisateur 12 ou soit par exemple prêté par un autre utilisateur d'un autre drone distinct du drone 14), le SSID associé à l'émetteur-récepteur 24 de cet accessoire étant automatiquement (i.e. sans intervention humaine de l'utilisateur 12) reconfiguré de sorte à être identique à l'identifiant associé au drone 14.

Puis, selon une étape 50, l'identifiant du réseau Wi-Fi MAMBO_thomas est diffusé par le premier émetteur-récepteur 24 de l'accessoire amovible 20 connecté au drone 14.

Sur la figure 3, le procédé 51 de connexion au réseau de communication mis en oeuvre réciproquement par le terminal mobile 30 comprend une première étape 52 de réception via le module d'émission-réception BLE R₂ selon le deuxième protocole P₂ de communication du message M émis par le deuxième émetteur-récepteur 34 BLE du drone 14, le message M comprenant l'identifiant MAMBO_thomas du support d'accueil 14, le message M étant en outre représentatif de la connexion de l'accessoire 20 au support d'accueil 14.

Un tel message M correspond par exemple sur l'affichage 58 de terminal mobile 30, représenté sur la figure 4, au bandeau 60 comprenant à la fois l'identifiant 62 de drone 14, par exemple MAMBO_thomas, une icône 64 représentative de la présence de la caméra 22 connectée au drone et un voyant de sélection 66.

Puis selon une étape 54, le terminal mobile 30 met en oeuvre une étape 54 de réception d'une information de sélection I_{S} d'utilisation du drone 14 saisie par l'utilisateur 12, via une interface de saisie du terminal mobile 30 correspondant par exemple à l'écran tactile E. En effet, du fait de la diffusion large mise en oeuvre par le drone 14, le terminal mobile 30 est propre à « voir » potentiellement plusieurs drones à la fois et à restituer une liste de messages émis selon le protocole P₂ BLE respectivement par chacun de ces drones. La sélection mise en oeuvre par l'utilisateur 12 consiste par exemple à sélection digitalement sur l'écran tactile E le bandeau 60 du drone 14 connecté avec une caméra 22 qu'il souhaite sélectionner.

Une telle sélection revient par exemple à changer l'affichage du terminal mobile en déclenchant un changement de couleur ou de texture du voyant de sélection 66 tel qu'illustré sur les exemples d'affichages 58 et 68 de la figure 4.

Une fois l'information de sélection reçue 54, le procédé 51 de connexion au réseau de communication comprend une étape 56 de connexion automatique du terminal mobile 30 au réseau de communication associé au premier protocole P₁ Wi-Fi de communication sans fil, le réseau de communication étant identifié par le terminal mobile 30 au moyen de l'identifiant réseau SSID MAMBO_thomas correspondant à l'identifiant MAMBO_thomas du support d'accueil 14.

Autrement dit, selon le procédé 51 de connexion selon l'invention aucune intervention de l'utilisateur 12 n'est nécessaire pour visualiser la liste de réseau Wi-Fi à disposition, puis sélectionner le réseau Wi-Fi pertinent pour l'échange du flux vidéo avec la caméra 22 de l'accessoire 20 connecté au drone 14.

Ainsi, un gain de temps et une réduction de la complexité d'utilisation du pilotage en mode de restitution vidéo est obtenu selon la présente invention. En effet, selon l'étape de connexion automatique, le module de connexion 36 du terminal mobile 30 détermine automatiquement à partir du moment où la sélection du drone 14 est effectuée par l'utilisateur que le réseau Wi-Fi à utiliser aura le même identifiant que celui du drone 14.

Une fois connecté au réseau Wi-Fi de l'émetteur-récepteur 24 de l'accessoire amovible 20, le terminal mobile 30 est propre à lancer une application logicielle dédiée à la restitution d'un flux vidéo dont l'interface est représentée sur l'affichage 68 de la figure 4, une telle application logicielle étant par exemple activable manuellement par l'utilisateur 12 au moyen d'une zone tactile 70 de l'écran d'affichage E.

Une fois l'application logicielle activée, l'utilisateur 12 place le terminal mobile 30 dans le casque 37 et la restitution du flux vidéo débute en mode immersif tel que représenté sur l'affichage 72 de la figure 4.

Lors de la restitution en temps réel du flux vidéo via le protocole Wi-Fi, le drone 14 transmet, de manière optionnelle, via l'émetteur-récepteur 24 de l'accessoire amovible 20 comprenant la caméra 22 une ou plusieurs information I_HUD de restitution tête haute propre à être superposée en temps réel dans une zone dédiée 74 sur le flux vidéo affiché via le terminal mobile 30.

Par exemple, l'information de restitution tête haute I_HUD indique à l'utilisateur le niveau de batterie, la présence d'un support d'enregistrement du flux vidéo au sein du drone 14, par exemple une carte SD (de l'anglais *Secure Digital*), la vitesse de déplacement du drone, son altitude, son attitude, son cap, la qualité de la connexion du réseau Wi-Fi entre le drone 14 et le terminal mobile 30, etc.

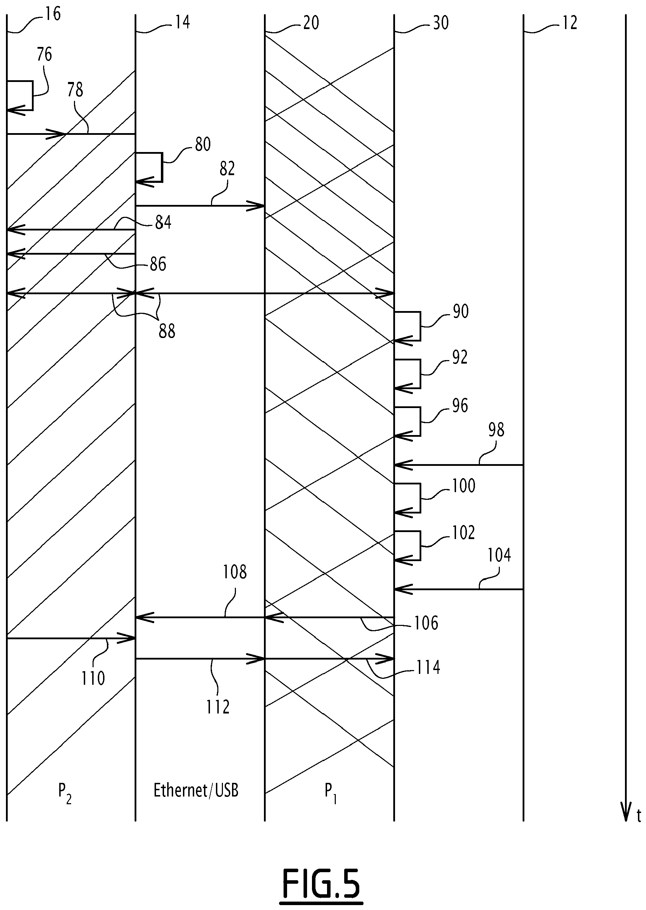

Les échanges au sein du système électronique de la figure 1 comprenant la manette 16, le drone 14, l'accessoire amovible 20 connecté au drone et comprenant la caméra 22 ainsi que l'émetteur récepteur Wi-Fi 24 et le terminal mobile 30 ainsi que les interactions avec l'utilisateur 12 sont à présents décrits avec le diagramme séquentiel de la figure 5 représentant ces différents échanges au cours du temps t.

Selon la première étape 76 la manette 16 est mise sous tension. Selon une étape 78, la manette 16 informe les dispositifs électroniques environnant de sa disponibilité en diffusant un message conforme au protocole de communication P₂ à savoir le BLE, le message est connu sous le nom anglais « *BLE advertisement* », le message comprenant en outre un identifiant de la manette 16.

En parallèle ou successivement tel que représenté sur la figure 5, le drone 14 est mis sous tension selon une étape 80. Selon une étape 82, le drone 14 détecte la connexion de l'accessoire amovible 20 et configure cet accessoire 20 et plus particulièrement l'émetteur-récepteur Wi-Fi 24 qu'il contient en configurant notamment l'identifiant réseau SSID, voire le mot de passe d'accès à ce réseau. Selon l'invention, l'identifiant réseau SSID est identique à l'identifiant du support d'accueil correspondant au drone 14. L'accessoire 20 comprenant la caméra applique ces paramètres imposés par le drone 14 et reste en attente d'une connexion d'un dispositif électronique environnant au réseau Wi-Fi associé à l'émetteur-récepteur Wi-Fi 24 de l'accessoire 20.

Puis selon une étape 84, le drone 14 informe également les dispositifs électroniques environnant de sa disponibilité en diffusant un message conforme au protocole de communication P₂ à savoir le BLE, le message est connu sous le nom anglais « *BLE advertisement* ». Selon une étape 86, le drone 14 se connecte à la manette disponible 16.

Selon une étape 88, le drone 14 indique son statut au sein d'un message M de « BLE advertisement » diffusé via le protocole de communication P₂.

Un tel message M comprend par exemple l'identifiant du drone, le type d'accessoire amovible qui lui est connecté (par exemple, une pince amovible (de l'anglais *Grabber*) ou un lanceur de billes (de l'anglais *Cannon*) ou encore l'accessoire amovible 20 comprenant la caméra 22). Par ailleurs, le drone 14 transmet en direct des données de télémétrie à la caméra telles que des données d'angle d'attitude, de cap, de niveau de batterie, d'altitude, ces données constituant des informations de restitution tête haute I_HUD propre être superposée sur les images du flux vidéo lors de sa restitution.

Successivement ou en parallèle, une application logicielle du terminal mobile 30 dédiée à la communication avec le drone 14 dédiée et à la restitution d'un flux vidéo est lancée selon une étape 90. Une fois cette application logicielle lancée sur le terminal mobile 30, le terminal mobile recherche, selon une étape 92 l'ensemble des dispositifs disponibles à sa portée selon le protocole de communication P₂ à savoir le BLE, et affiche, selon une étape 96, par exemple, sous la forme d'une liste, tous les dispositifs électroniques à sa portée.

Selon une étape 98, l'utilisateur 12 sélectionne, via une interface de saisie du terminal mobile 30, par exemple un écran tactile, le dispositif électronique qu'il souhaite utiliser parmi la liste de dispositifs électroniques affichés.

Puis selon une étape 100, dès la réception de la sélection saisie par l'utilisateur, le terminal mobile 30 se connecte automatiquement au réseau Wi-Fi associé à l'émetteur-récepteur 24 de l'accessoire amovible 20 du drone 14 sélectionné, sans aucune interaction supplémentaire avec l'utilisateur 12 du fait que selon l'invention, le terminal mobile 30 « sait » automatiquement que la sélection d'un drone 14, connecté à un accessoire amovible 20 comprenant une caméra 22 et un émetteur-récepteur Wi-Fi 24, de l'utilisateur vaut requête et validation de la connexion au réseau associé à l'émetteur-récepteur Wi-Fi 24, le réseau étant identifié par l'identifiant SSID identique à l'identifiant du drone 14.

Une fois connecté au réseau Wi-Fi, selon une étape 102, le terminal mobile 30 restitue une page d'accueil 68 de l'interface de restitution d'un flux vidéo telle que représentée sur la figure 4, et la restitution du flux vidéo en temps réel est déclenchée manuellement par l'utilisateur 12 selon une étape 104, par exemple par pression manuelle de la zone 70 de l'écran tactile E du terminal mobile tel que représenté sur la figure 5.

De plus, lors de cette étape 104, l'utilisateur 12 a l'occasion de sélectionner des commandes de réglage vidéo afin de contrôler par exemple le débit du flux vidéo, la qualité d'image, le début/la fin de la diffusion/enregistrement du flux vidéo, un changement de canal Wi-Fi en présence de plusieurs autres utilisateurs de drone, le déclenchement d'un mode anti-scintillement (de l'anglais *Anti-Flickering*), etc. Ces commandes de réglage vidéo sont émises par le terminal mobile 30 selon une étape 106, puis sont propres à transiter, selon une étape 108, par le premier émetteur-récepteur 24 de l'accessoire amovible 20, puis par le connecteur 26 de l'accessoire amovible 20 connecté au port de connexion 18 USB du drone 14, récupérant ces commandes après passage dans un module logiciel du drone 14, non représenté, propre à transformer ces données sous la forme de paquets conformes au protocole Ethernet.

Selon une étape 110, une fois les réglages vidéo effectués au sein du drone 14, la manette 16 transmet des instructions de pilotage conformément au protocole de communication P₂ BLE au drone 14, qui lui-même, selon une étape 112 transmet des instructions de commande à la caméra. Enfin, la caméra 22 de l'accessoire amovible 20 transmet via l'émetteur-récepteur 24 et conformément au protocole de communication P₁ Wi-Fi adapté au débit d'un flux vidéo, le flux vidéo au terminal mobile 30 selon une étape 114, le terminal restituant, notamment lorsqu'il est inséré dans le casque 27, en vision immersive le flux vidéo à l'utilisateur 12.

Ainsi, l'utilisateur 12 dispose d'un protocole de communication P₁, par exemple Wi-Fi, adapté à la restitution d'un flux vidéo, ce protocole n'étant utilisé par le terminal mobile 30 pour communiquer avec le drone 14 qu'en présence d'un accessoire amovible 20, comprenant une caméra 22 et un émetteur-récepteur 24 conforme au protocole de communication P₁ Wi-Fi, connecté au drone 14, la connexion du terminal mobile 30 au réseau de communication conformément au protocole de communication P₁ Wi-Fi étant déclenchée par la diffusion (de l'anglais *advertising*) préalable d'un message M conformément à un deuxième protocole de communication P₂, par exemple BLE, distinct du protocole de communication P₁ Wi-Fi.

## Revendications

1. Procédé (45) de diffusion d'un identifiant (SSID) de réseau de communication associé à un premier protocole (P₁) de communication sans fil, le réseau comprenant au moins un terminal mobile (30) de communication et un accessoire amovible (20) pour un support d'accueil (14), tel qu'un support portable ou un véhicule sans pilote à bord, en particulier un drone (14), l'accessoire (20) comprenant au moins une caméra (22), un premier émetteur-récepteur (24) de données selon le premier protocole de communication (P₁), et un connecteur (26) configuré pour la connexion électrique de l'accessoire (20) à un port de connexion (18) du support d'accueil (14),
le support d'accueil (14) comprenant un deuxième émetteur-récepteur (34) embarqué au sein du support d'accueil (14), le deuxième émetteur-récepteur (34) étant propre à communiquer selon un deuxième protocole (P₂) de communication distinct du premier protocole de communication (P₁), le procédé (45) comprenant au moins, une fois l'accessoire (20) connecté électriquement au support d'accueil :
- la diffusion (46), par le deuxième émetteur-récepteur (34) du support d'accueil, d'un message comprenant au moins un identifiant du support d'accueil, le message étant en outre représentatif de la connexion de l'accessoire (20) au support d'accueil (14),
- la configuration (48) par le support d'accueil d'un identifiant réseau (SSID), et la diffusion (50) par le premier émetteur-récepteur (24) de l'accessoire amovible (20), l'identifiant réseau (SSID) étant identique à l'identifiant du support d'accueil (14).

2. Procédé (45) de diffusion selon la revendication 1, dans lequel le premier protocole de communication (P₁) correspond au Wi-Fi et dans lequel le deuxième protocole de communication (P₂) correspond au Bluetooth à basse énergie.

3. Procédé (51) de connexion à un réseau de communication associé à un premier protocole de communication (P₁) sans fil, le réseau comprenant au moins un terminal mobile (30) et un accessoire amovible (20) pour un support d'accueil (14), telle qu'un support portable ou un véhicule sans pilote à bord, en particulier un drone (14), l'accessoire (20) comprenant au moins une caméra (22), un premier émetteur-récepteur (24) de données selon le premier protocole de communication (P₁), et un connecteur (26) configuré pour la connexion électrique de l'accessoire (20) à un port de connexion (18) du support d'accueil (14),
le support d'accueil (14) comprenant un deuxième émetteur-récepteur (34) embarqué au sein du support d'accueil (14), le deuxième émetteur-récepteur (34) étant propre à communiquer selon un deuxième protocole (P₂) de communication distinct du premier protocole de communication (P₁),
le procédé (51) de connexion étant mis en oeuvre par le terminal mobile (30) et comprenant successivement :
- la réception (52) selon le deuxième protocole (P₂) de communication d'un message émis par le deuxième émetteur-récepteur (34) du support d'accueil (14), le message comprenant un identifiant du support d'accueil (14), le message étant en outre représentatif de la connexion de l'accessoire (20) au support d'accueil (14),
- la réception (54) d'une information de sélection d'utilisation du support d'accueil (14) saisie par un utilisateur, et
- la connexion (56) automatique du terminal mobile (30) au réseau de communication associé au premier protocole (P₁) de communication sans fil, le réseau de communication étant identifié par le terminal mobile (30) au moyen d'un identifiant réseau (SSID) identique à l'identifiant du support d'accueil (14).

4. Produit programme d'ordinateur comprenant des instructions logicielles pour la mise en oeuvre d'un procédé selon la revendication 1 ou 2, et/ou pour la mise en oeuvre d'un procédé selon la revendication 3.

5. Support d'accueil (14), tel qu'un support portable ou un véhicule sans pilote à bord, en particulier un drone (14), sur lequel un accessoire amovible (20) est propre à être connecté, l'accessoire (20) comprenant au moins une caméra (22), un premier émetteur-récepteur (24) de données selon le premier protocole de communication (P₁), et un connecteur (26) configuré pour la connexion électrique de l'accessoire (20) à un port de connexion (18) du support d'accueil (14),
le support d'accueil (14) comprenant :
- un deuxième émetteur-récepteur (34) embarqué au sein du support d'accueil (14), le deuxième émetteur-récepteur (34) étant propre à :
- communiquer selon un deuxième protocole de communication (P₂) distinct du premier protocole de communication (P₁),
- diffuser un message, une fois l'accessoire (20) connecté électriquement au support d'accueil (14), le message comprenant un identifiant du support d'accueil, le message étant en outre représentatif de la connexion de l'accessoire (20) au support d'accueil (14),
- un module de configuration (35) d'un identifiant réseau propre à être émis par le premier émetteur-récepteur de l'accessoire amovible, l'identifiant réseau étant identique à l'identifiant du support d'accueil (14), le réseau de communication étant associé au premier protocole de communication sans fil (P₁) et comprenant au moins un terminal mobile (30) et un accessoire amovible (20) pour un support d'accueil (14).

6. Support d'accueil (14) selon la revendication 5 dans lequel le port de connexion du support d'accueil (14) est un port USB dédié au moins à la connexion dudit accessoire (20).

7. Support d'accueil (14) selon la revendication 5 ou 6 dans lequel le déplacement du support d'accueil (14) est propre à être piloté par :
- une manette (16) de commande au moyen d'instructions de pilotage transmises conformément au deuxième protocole de communication (P₂) indépendamment de la connexion de l'accessoire (20) au support d'accueil (14), ou
- le terminal mobile (30) au moyen d'instructions de pilotage transmises conformément au premier protocole de communication (P₁), en présence de l'accessoire amovible (20) comprenant la caméra (22) connecté au support d'accueil, ou au moyen d'instructions de pilotage transmises conformément au deuxième protocole de communication (P₂), en l'absence de l'accessoire amovible (20) comprenant la caméra (22) connecté au support d'accueil (14).

8. Support d'accueil (14) selon l'une quelconque des revendications 5 à 7, dans lequel le premier émetteur-récepteur (24) de l'accessoire amovible (20) connecté au support d'accueil (14) est propre à transmettre un flux vidéo capturé par ladite caméra (22) selon le premier protocole de communication (P₁) audit terminal mobile (30) une fois connecté audit réseau de communication.

9. Support d'accueil (14) selon la revendication 8, dans lequel le support d'accueil (14) est configuré pour transmettre selon le premier protocole de communication (P₁), via le premier émetteur-récepteur (24), au moins une information (I_HUD) de restitution tête haute propre à être superposée en temps réel sur ledit flux vidéo affiché via ledit terminal mobile (30).

10. Terminal mobile (30) de communication propre à appartenir à un réseau de communication associé à un premier protocole de communication (P₁) sans fil, le réseau de communication comprenant au moins le terminal mobile (30) et un accessoire amovible (20) pour un support d'accueil (14), telle qu'un support portable ou un véhicule sans pilote à bord, en particulier un drone (14), l'accessoire (20) comprenant au moins une caméra (22), un premier émetteur-récepteur (24) de données selon le premier protocole de communication (P₁), et un connecteur (26) configuré pour la connexion électrique de l'accessoire (20) à un port de connexion (18) du support d'accueil (14),
le support d'accueil (14) comprenant un deuxième émetteur-récepteur (34) embarqué au sein du support d'accueil (14), le deuxième émetteur-récepteur (34) étant propre à communiquer selon un deuxième protocole de communication (P₂) distinct du premier protocole de communication (P₁),
le terminal mobile (30) comprenant :
- un premier module d'émission-réception (R₂) selon le deuxième protocole de communication (P₂) d'un message émis par le deuxième émetteur-récepteur (34) du support d'accueil (14), le message comprenant un identifiant du support d'accueil (14), le message étant en outre représentatif de la connexion de l'accessoire au support d'accueil,
- un module de réception d'une information de sélection d'utilisation du support d'accueil saisie par un utilisateur (12), et
- un module de connexion (31) automatique du terminal mobile (30) au réseau de communication associé au premier protocole de communication sans fil (P₁), le réseau de communication étant identifié par le terminal mobile (30) au moyen d'un identifiant réseau identique à l'identifiant du support d'accueil (14).

11. Terminal mobile (30) de communication selon la revendication 10 dans lequel le terminal mobile est configuré pour être insérable dans un système (10) de visualisation immersive propre à être porté par un utilisateur (12).

12. Terminal mobile (30) de communication selon la revendication 10 ou 11 dans lequel le terminal mobile (30), une fois connecté automatiquement audit réseau de communication associé au premier protocole de communication (P₁), est configuré pour :
- recevoir au moyen d'un deuxième module d'émission-réception (R₁) et restituer un flux vidéo reçu selon le premier protocole de communication (P₁), et
- en cas d'interruption de la connexion au réseau de communication associé au premier protocole de communication (P₁) en cours de restitution du flux vidéo, afficher la dernière image reçue préalablement à ladite interruption pendant une période prédéterminée.
